# EUROPÄISCHE PATENTANMELDUNG

(11) **EP 4 681 820 A1**
(43) Veröffentlichungstag der Anmeldung: **21.01.2026**
(21) Anmeldenummer: 25188753.5
(22) Anmeldetag: 10.07.2025
(51) Int. Cl.: B01L 3/02

(54) **PIPETTIERVORRICHTUNG**

(30) Priorität: 16.07.2024 DE 102024002311
(71) Anmelder: BRAND GMBH + CO KG, 97877 Wertheim (DE)
(72) Erfinder: Pfohl, Josef, 97900 Külsheim (DE); Ertl, Michael, 97828 Marktheidenfeld (DE); Grein, Tom, 97877 Wertheim (DE); Kurz, Markus, 97877 Wertheim (DE); Bundschuh, Jan, 97900 Külsheim (DE)
(74) Vertreter: Von Rohr Patentanwälte Partnerschaft mbB

(57) **Zusammenfassung**

Die Erfindung betrifft eine Pipettiervorrichtung zum Aufnehmen und Abgeben von Fluidvolumina, aufweisend eine Verdrängereinrichtung mit einem Verdrängermittel und einem Verdrängergehäuse, ein durch einen Benutzer manuell bedienbares, drehbares Einstellmittel zum Einstellen eines Pipettiervolumens der Pipettiervorrichtung, einen Anschlag, dessen Lage einstellbar ist und einen Hub des Verdrängermittels festlegt, wobei durch den Hub des Verdrängermittels das Pipettiervolumen definiert ist, und eine mit dem Einstellmittel gekoppelte Kopplungseinrichtung zur Kopplung des Einstellmittels mit dem Anschlag. Die Pipettiervorrichtung weist einen Schutzmechanismus zum Begrenzen einer Drehmomentübertragung von dem Einstellmittel auf die Kopplungseinrichtung auf, sodass unterhalb eines bestimmten Schwellwerts eines auf das Einstellmittel wirkenden Drehmoments und/oder einer auf das Einstellmittel wirkenden Kraft das Einstellmittel mit der Kopplungseinrichtung derart gekoppelt ist, dass sich das Einstellmittel und die Kopplungseinrichtung gemeinsam bewegen und oberhalb des Schwellwerts die Drehmoment- und/oder Kraftübertragung reduziert oder unterbrochen ist.

## Beschreibung

Die vorliegende Erfindung betrifft eine Pipettiervorrichtung zum Aufnehmen und Abgeben von Fluidvolumina bzw. zum Handhaben von Flüssigkeit gemäß Anspruch 1.

Grundsätzlich sind Pipettiervorrichtungen aus dem Stand der Technik bekannt.

Aus dem Stand der Technik bekannte Pipettiervorrichtungen weisen üblicherweise ein Einstellmittel zum Einstellen eines Pipettiervolumens auf. Das Einstellmittel wird auch als Volumenverstellknopf oder Volumenverstellrad bezeichnet. Zum Verstellen bzw. Einstellen des Pipettiervolumens wird das Einstellmittel durch einen Benutzer gedreht, insbesondere um eine Längsachse der Pipettiervorrichtung. Das Einstellmittel ist drehfest mit einer Kopplungseinrichtung verbunden, die weitere Funktionen oder funktionelle Gruppen bzw. Komponenten der Pipettiervorrichtung antreibt, zum Beispiel eine Volumenanzeige zum Anzeigen des eingestellten Pipettiervolumens. Die Kopplungseinrichtung kann als Einstellhülse ausgebildet sein und über einen außenliegenden Zahnkranz am unteren Ende der Einstellhülse die Volumenanzeige antreiben sowie über einen innenliegenden Zahnkranz am oberen Ende eine Hubstange der Pipettiervorrichtung antreiben bzw. damit gekoppelt oder koppelbar sein.

Die aus dem Stand der Technik bekannte Lösung hat den Nachteil, dass Funktionen der Pipettiervorrichtung fehlerhaft ausgeführt werden oder Komponenten der Pipettiervorrichtung (zum Teil irreversibel) beschädigt oder zerstört werden können, wenn der Benutzer beim Drehen des Einstellmittels eine zu hohe Kraft bzw. ein zu hohes Drehmoment aufwendet.

Es ist eine Aufgabe der vorliegenden Erfindung, eine Pipettiervorrichtung anzugeben, die gegen Beschädigungen, Zerstörungen und/oder Fehlfunktionen durch unsachgemäße Benutzung, insbesondere durch zu hohen Krafteintrag beim Einstellen eines Pipettiervolumens, geschützt ist.

Die obige Aufgabe wird durch eine Pipettiervorrichtung gemäß Anspruch 1 gelöst. Vorteilhafte Weiterbildungen sind Gegenstand der Unteransprüche.

Die vorschlagsgemäße Pipettiervorrichtung ist zum Aufnehmen und Abgeben von Fluidvolumina ausgebildet und weist eine Verdrängereinrichtung, insbesondere eine Kolben-Zylinder-Anordnung, mit einem Verdrängermittel, insbesondere einem Kolben, und einem Verdrängergehäuse, insbesondere einem Zylinder, auf.

Ferner weist die vorschlagsgemäße Pipettiervorrichtung ein durch einen Benutzer manuell bedienbares Einstellmittel zum Einstellen eines Pipettiervolumens der Pipettiervorrichtung auf. Das Einstellmittel ist zum Einstellen des Pipettiervolumens drehbar, insbesondere um eine Längsachse der Pipettiervorrichtung. Das Einstellmittel kann auch als Volumenverstellknopf oder Volumenverstellrad bezeichnet werden.

Weiter weist die vorschlagsgemäße Pipettiervorrichtung einen Anschlag und eine mit dem Einstellmittel gekoppelte Kopplungseinrichtung zur Kopplung des Einstellmittels mit dem Anschlag auf. Die Lage des Anschlags ist einstellbar und der Anschlag bzw. dessen Lage legt einen Hub des Verdrängermittels fest, wobei durch den Hub des Verdrängermittels das Pipettiervolumen definiert ist. Die Kopplungseinrichtung ist derart mit dem Anschlag gekoppelt oder koppelbar, dass eine Drehung des Einstellmittels eine Änderung der Lage des Anschlags mittels der Kopplungseinrichtung bewirkt, so dass der Hub des Verdrängermittels und damit das Pipettiervolumen geändert wird.

Vorschlagsgemäß weist die Pipettiervorrichtung einen Schutzmechanismus zum Begrenzen einer Drehmoment- und/oder Kraftübertragung von dem Einstellmittel auf die Kopplungseinrichtung auf, sodass unterhalb eines Schwellwerts eines auf das Einstellelement wirkenden Drehmoments bzw. einer auf das Einstellelement wirkenden Kraft das Einstellelement mit der Kopplungseinrichtung derart gekoppelt ist, dass das Einstellelement und die Kopplungseinrichtung sich gemeinsam bewegen und oberhalb des Schwellwerts die Drehmoment- und/oder Kraftübertragung reduziert oder unterbrochen ist. Insbesondere ist unterhalb das Schwellwerts das Einstellmittel drehfest mit der Kopplungseinrichtung gekoppelt. Mit anderen Worten bewirkt also der Schutzmechanismus eine Begrenzung einer Drehmomentübertragung und/oder Kraftübertragung von dem Einstellmittel auf die Kopplungseinrichtung, sodass diese Drehmomentübertragung und/oder Kraftübertragung oberhalb des Schwellwerts reduziert oder unterbrochen ist.

Dies hat den Vorteil, dass die Kraftübertragung bzw. Drehmomentübertragung bei einem bestimmten Schwellwert, also einer definierten Überlast, unterbrochen wird. Hierdurch werden die Kopplungseinrichtung bzw. damit gekoppelte Teile vor einer Beschädigung oder Zerstörung durch Anwendungsfehler des Benutzers geschützt. Die Bedienung der Pipettiervorrichtung kann somit sicherer gestaltet werden.

Außerdem kann es ohne den Schutzmechanismus bei übermäßigem Kraft- bzw. Drehmomenteintrag über das Einstellmittel zu Funktionsfehlern, Instabilität, und somit Beeinträchtigungen der Präzision von mit der Pipettiervorrichtung durchgeführten Pipettiervorgängen kommen. Durch den Schutzmechanismus wird daher auch die Präzision bei der Benutzung der Pipettiervorrichtung sichergestellt.

Es ist bevorzugt, dass der Schutzmechanismus als Rutschkupplung ausgebildet ist oder eine Rutschkupplung aufweist. Hierdurch kann auf einfache Weise eine Unterbrechung der Kraft- bzw. Drehmomentübertragung ab einem bestimmten Drehmoment bzw. einer bestimmten Kraft realisiert werden.

Der Schwellwert beträgt vorzugsweise mindestens 2 Ncm und/oder höchstens 12 Ncm, insbesondere zwischen 5 Ncm und 9 Ncm. Dies ermöglicht einerseits eine zuverlässige Kopplung bei einer sachgemäßen Benutzung der Pipettiervorrichtung und andererseits einen effektiven Schutz vor übermäßig hohen Kraft- bzw. Drehmomenteinträgen, die zu Beschädigungen, Zerstörungen oder Beeinträchtigungen der Präzision führen könnten.

Der Schutzmechanismus weist vorzugsweise mindestens ein Schutzelement auf. Bevorzugt ist das Schutzelement innerhalb der Pipettiervorrichtung angeordnet und/oder bewirkt das Schutzelement eine drehmoment- bzw. kraftabhängige Kopplung des Einstellmittels mit der Kopplungseinrichtung. Hierdurch kann der Schutzmechanismus auf einfache und zuverlässige Weise realisiert werden.

Das Schutzelement ist vorzugsweise innerhalb des Einstellmittels angeordnet und/oder in dem Einstellmittel aufgenommen und/oder zwischen dem Einstellmittel und der Kopplungseinrichtung angeordnet. Somit ist der Schutzmechanismus für den Benutzer nicht sichtbar und beeinträchtigt darüber hinaus nicht die Bedienung der Pipettiervorrichtung durch den Benutzer.

Es ist bevorzugt, dass das Einstellmittel einen vorzugweise zylindrischen Kopplungsabschnitt zur Kopplung des Einstellmittels mit der Kopplungseinrichtung aufweist, insbesondere wobei das Schutzelement, insbesondere der O-Ring bzw. Sprengring, den Kopplungsabschnitt umgibt oder umgekehrt. Dies hat sich als besonders wirkungsvoll und vorteilhaft bei der Herstellung erwiesen.

Das Schutzelement ist vorzugsweise ringförmig, insbesondere ein O-Ring und/oder Sprengring. Hierdurch kann auf einfache und kostengünstige Weise der Schutzmechanismus, insbesondere eine Rutschkupplung, realisiert werden.

Vorzugsweise ist bzw. wird das Einstellmittel mittels des Schutzelements gegen die Kopplungseinrichtung gedrückt, sodass das Einstellmittel und die Kopplungseinrichtung unterhalb des Schwellwerts reibschlüssig und insbesondere drehfest miteinander verbunden sind. Dies bewirkt eine Kopplung und Kraft- bzw. Drehmomentübertragung zwischen dem Einstellmittel und der Kopplungseinrichtung bei Kräften bzw. Drehmomenten unterhalb des Schwellwerts.

Das Einstellmittel weist vorzugsweise einen Aufnahmeraum auf, der als ringförmiger Spalt ausgebildet ist und in dem das Schutzelement aufgenommen ist. Dies ist platzsparend und schützt das Schutzelement vor Manipulation und Kontakt mit anderen Bauteilen oder Komponenten, sodass eine zuverlässige Funktion des Schutzmechanismus sichergestellt ist.

Das Schutzelement ist vorzugsweise mit dem Einstellmittel oder der Kopplungseinrichtung lösbar gekoppelt, insbesondere verrastet. Vorzugsweise weist das Einstellmittel oder die Kopplungseinrichtung ein Verzahnungsmittel auf und/oder greift das Schutzelement in das Einstellmittel oder die Kopplungseinrichtung, insbesondere das Verzahnungsmittel, ein. Hierdurch wird die gewünschte kraft- bzw. drehmomentabhängige Kopplung, insbesondere die Reduzierung oder Unterbrechung der Kraft- bzw. Drehmomentübertragung oberhalb des Schwellwerts, auf konstruktiv einfache Weise zuverlässig erreicht.

Vorzugsweise ist das Schutzelement an der Kopplungseinrichtung oder dem Einstellmittel, insbesondere formschlüssig, gehalten bzw. befestigt. Dies ist einer einfachen Montage und sicheren bzw. zuverlässigen Funktion zuträglich.

Es ist bevorzugt, dass das Schutzelement derart verbiegbar bzw. verformbar ist, dass bei Erreichen oder Überschreiten des Schwellwerts die durch das Schutzelement vermittelte Kopplung des Einstellmittels mit der Kopplungseinrichtung durch eine Verformung des Schutzelements aufgehoben wird, Besonders bevorzugt ist das Schutzelement reversibel verformbar. Dieser Mechanismus hat sich als besonders vorteilhaft zur Realisierung der kraft- bzw. drehmomentabhängigen Kopplung, insbesondere der Reduzierung oder Unterbrechung der Kraft- bzw. Drehmomentübertragung oberhalb des Schwellwerts, erwiesen.

Vorzugsweise besteht das Schutzelement aus Metall und/oder ist das Schutzelement elastisch und/oder federnd ausgebildet. Besonders bevorzugt ist das Schutzelement eine Blattfeder oder ein Stanzbiegeteil. Dies ist vorteilhaft für eine lange Lebensdauer bzw. eine zuverlässige Funktion über einen langen Zeitraum.

Das Einstellmittel ist vorzugsweise an einem axialen Ende der Kopplungseinrichtung angeordnet, insbesondere auf das axiale Ende aufgesteckt und/oder in das axiale Ende eingesteckt. Dies ermöglicht eine einfache Montage bzw. Integration des Schutzmechanismus. Falls das Einstellmittel eingesteckt ist, befindet sich der Kopplungsabschnitt mit dem Schutzelement bevorzugt an der Kopplungseinrichtung.

Gemäß einem bevorzugten Aspekt weisen das Einstellmittel und die Kopplungseinrichtung einander zugeordnete Rastelemente auf, wobei das Einstellmittel mittels der Rastelemente formschlüssig gegen Entfernen von der Kopplungseinrichtung in Richtung einer Längsachse der Kopplungseinrichtung bzw. Pipettiervorrichtung gesichert ist. Somit kann der Schutzmechanismus, insbesondere dessen Schutzelement, nicht von der Pipettiervorrichtung entfernt werden.

Die vorgenannte Kopplungseinrichtung ist vorzugsweise ein hülsenförmiges Bauteil.

Die Kopplungseinrichtung ist vorzugsweise mit einer Volumenanzeige zum Anzeigen des eingestellten Pipettiervolumens gekoppelt oder koppelbar, insbesondere über ein Verzahnungsmittel, beispielsweise einen Zahnkranz, ein Zahnrad und/oder eine Zahnstange. Hier sind jedoch auch andere Lösungen möglich, beispielsweise eine Kopplung der Kopplungseinrichtung mit der Volumenanzeige durch einen Riemenantrieb oder eine reibschlüssige Kopplung der Kopplungseinrichtung mit der Volumenanzeige.

Vorzugsweise weist die Pipettiervorrichtung eine Antriebseinrichtung zum Bewegen des Verdrängermittels im Verdrängergehäuse auf, wobei eine Bewegung des Verdrängermittels durch einen oberen Anschlag, einen unteren Anschlag und wenigstens einen Gegenanschlag der Antriebseinrichtung und/oder des Verdrängermittels begrenzt ist, so dass der Hub des Verdrängermittels definiert ist. Hierbei ist der vorgenannte Anschlag, dessen Lage einstellbar ist und den Hub des Verdrängermittels definiert, durch den oberen Anschlag oder den unteren Anschlag gebildet ist.

Die vorgenannten Aspekte und Merkmale sowie die sich aus der weiteren Beschreibung ergebenden Aspekte und Merkmale der vorliegenden Erfindung können unabhängig voneinander, aber auch in beliebiger Kombination realisiert werden.

Weitere Vorteile, Merkmale, Eigenschaften und Aspekte der vorliegenden Erfindung ergeben sich aus den Ansprüchen und der nachfolgenden Beschreibung einer bevorzugten Ausführungsform anhand der Zeichnung.

Es zeigt:
- Fig. 1: eine perspektivische Darstellung einer erfindungsgemäßen Pipettiervorrichtung;
- Fig. 2: einen Schnitt der erfindungsgemäßen Pipettiervorrichtung;
- Fig. 3: eine Seitenansicht eines Abschnitts der erfindungsgemäßen Pipettiervorrichtung mit einem Einstellmittel und einer Kopplungseinrichtung;
- Fig. 4: einen Schnittdarstellung des in Fig. 3 gezeigten Abschnitts mit einem Schutzmechanismus gemäß einer ersten Ausführungsform;
- Fig. 5: eine Explosionsdarstellung des in Fig. 4 gezeigten Abschnitts mit einem Schutzmechanismus gemäß der ersten Ausführungsform;
- Fig. 6: eine Explosionsdarstellung des in Fig. 3 gezeigten Abschnitts mit einem Schutzmechanismus gemäß einer zweiten Ausführungsform;
- Fig. 7: eine Schnittdarstellung des in Fig. 6 gezeigten Abschnitts mit einem Schutzmechanismus gemäß der zweiten Ausführungsform;
- Fig. 8: eine Explosionsdarstellung des in Fig. 3 gezeigten Abschnitts mit einem Schutzmechanismus gemäß einer dritten Ausführungsform;
- Fig. 9: eine Schnittdarstellung des in Fig. 8 gezeigten Abschnitts mit einem Schutzmechanismus gemäß der dritten Ausführungsform; und
- Fig. 10: eine Seitenansicht ausgewählter Komponenten der erfindungsgemäßen Pipettiervorrichtung.

In den Figuren werden für gleiche oder ähnliche Teile dieselben Bezugszeichen verwendet, wobei entsprechende Eigenschaften und Vorteile erreicht werden können, auch wenn eine wiederholte Beschreibung aus Vereinfachungsgründen weggelassen ist.

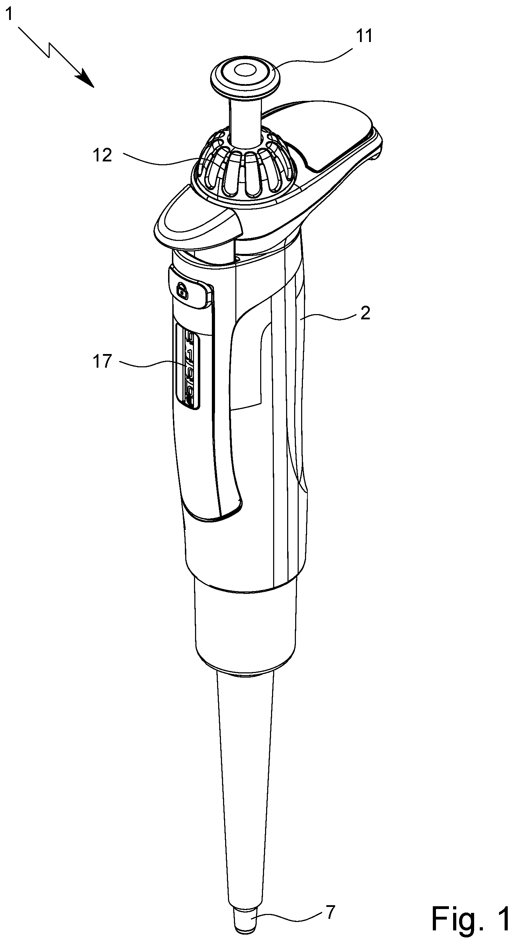

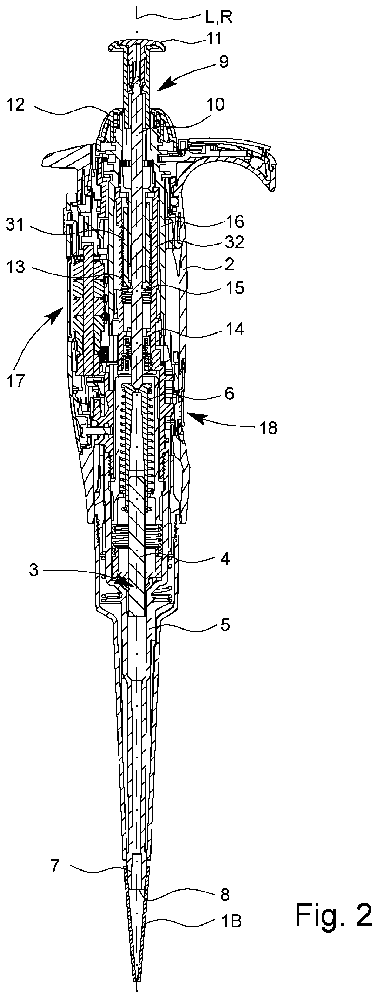

Die Figuren 1 und 2 zeigen eine Pipettiervorrichtung 1 zum Aufnehmen und Abgeben von Fluidvolumina bzw. zum Handhaben von Flüssigkeiten in einer perspektivischen Ansicht und in einer Schnittansicht. Die Pipettiervorrichtung 1 weist ein Gehäuse 2 auf. An dem Gehäuse 2 kann die Pipettiervorrichtung 1 von einem Benutzer per Hand gehalten und geführt werden.

Die Pipettiervorrichtung 1 weist eine Verdrängereinrichtung 3 auf, die insbesondere in Fig. 2 gezeigt ist. Mittels der Verdrängereinrichtung 3 kann ein Fluid, insbesondere eine Flüssigkeit, in eine Pipettenspitze 1B aufgenommen und anschließend wieder von dieser abgegeben werden.

Die Verdrängereinrichtung 3 weist ein Verdrängermittel 4 und ein Verdrängergehäuse 5 auf. In dem dargestellten und bevorzugten Ausführungsbeispiel ist die Verdrängereinrichtung 3 als eine Kolben-Zylinder-Anordnung ausgebildet, so dass das Verdrängermittel 4 als Kolben und das Verdrängergehäuse 5 als Zylinder ausgebildet sind.

Die Pipettiervorrichtung 1 und/oder die Verdrängereinrichtung 3 hat vorzugsweise eine langgestreckte Form bzw. weist eine Längsachse L auf. Die Längsachse L verläuft vorzugsweise mittig durch die Verdrängereinrichtung 3, insbesondere das Verdrängermittel 4 und das Verdrängergehäuse 5.

Wenn im Folgenden Begriffe wie "axial", "axiale Richtung" u. dgl. verwendet werden, so bezieht sich dies auf die Längsachse L. Entsprechend beziehen sich Begriffe wie "radial", "radiale Richtung" u. dgl. ebenfalls auf die Längsachse L und kennzeichnen eine Richtung senkrecht zur Längsachse L. Wenn im Folgenden Begriffe wie "oben", "unten" u. dgl. verwendet werden, so bezieht sich dies auf die Erstreckung der Längsachse L und insbesondere auf die in Fig. 1 dargestellte Lage der Pipettiervorrichtung 1, die insbesondere einer Gebrauchslage beim Verwenden bzw. Halten der Pipettiervorrichtung 1 durch einen Nutzer entspricht.

Das Verdrängergehäuse 5 bildet einen Hohlraum, der zu einer Pipettenspitze 1B hin offen und ansonsten gasdicht ist. Das Verdrängermittel 4 ist vorzugsweise axial und/oder entlang der Längsachse L und in Bezug zu dem Hohlraum bewegbar. Mittels des Verdrängermittels 4 ist das Volumen des Hohlraums veränderbar, so dass bei Vergrößerung des Hohlraums wegen des entstehenden Unterdrucks Fluid in den Hohlraum gezogen werden kann und bei Verkleinerung des Volumens wieder abgegeben bzw. aus dem Hohlraum verdrängt werden kann. Das Verdrängermittel 4 ist vorzugsweise gegen das Verdrängergehäuse 5 abgedichtet, insbesondere mittels einer Dichtung.

Die Verdrängereinrichtung 3 weist vorzugsweise ein Rückstellmittel 6, insbesondere eine Rückstellfeder, auf. Mittels des Rückstellmittels 6 ist das Verdrängermittel 4 in eine Ausgangsstellung bewegbar, insbesondere in die Stellung mit maximalen Volumen des Hohlraums, die der Einsaugrichtung des Fluids bzw. der Richtung entgegen der Abgaberichtung des Fluids entspricht.

Das Verdrängergehäuse 5 hat bzw. bildet vorzugsweise einen Schaft 7 der Pipettiervorrichtung 1. Der Schaft 7 dient zum lösbaren Befestigen der Pipettenspitze 1B und hat eine insbesondere endseitige Öffnung 8, die das Verdrängergehäuse 5 mit der Pipettenspitze 1B verbindet, wie bereits erläutert.

Eine Pipettenspitze 1B ist ein im Wesentlichen konisches Rohr mit zwei sich gegenüberliegenden Öffnungen, deren jeweiliger Querschnitt sich unterscheidet. Mit der größeren Öffnung kann die Pipettenspitze 1B auf den Schaft 7 aufgesteckt werden und bildet eine gasdichte Verbindung. In die Pipettenspitze 1B kann dann Flüssigkeit durch den veränderbaren Hohlraum gesaugt werden und anschließend wieder abgegeben werden.

Die Pipettiervorrichtung 1 weist eine Antriebseinrichtung 9 zum Bewegen des Verdrängermittels 4 im Verdrängergehäuse 5 auf. Die Antriebseinrichtung 9 vorzugsweise hat eine Antriebsstange 10, die sich insbesondere axial und/oder entlang der Längsachse L erstreckt. Die Antriebsstange 10 ist vorzugsweise in axialer Richtung und/oder zumindest im Wesentlichen parallel zum Verdrängermittel 4 bewegbar.

Die Antriebseinrichtung 9 weist vorzugsweise ein Bedienelement 11 auf. Das Bedienelement 11 ist vorzugsweise axial, insbesondere entlang der Längsachse L, bewegbar, insbesondere in Richtung des Gehäuses 2 niederdrückbar. Insbesondere kann die Antriebseinrichtung 9 über das Bedienelement 11 betätigt, insbesondere entlang der Längsachse L bewegt, werden.

Ein Betätigen des Bedienelementes 11, insbesondere ein Niederdrücken bzw. axiales Bewegen entlang der Längsachse L, bewirkt, dass die Antriebsstange 10 gegen das Verdrängermittel 4 gedrückt wird, so dass sich das Verdrängermittel 4 in das Verdrängergehäuse 5 bewegt und das Volumen des Hohlraums verkleinert. Dementsprechend kann durch Betätigen der Antriebseinrichtung 9 bzw. des Bedienelementes 11 Fluid aus der Pipettiervorrichtung 1, insbesondere über den Schaft 7 und die Pipettenspitze 1B, abgegeben werden.

Unbetätigt nehmen das Verdrängermittel 4 und die Antriebseinrichtung 6 bzw. die Antriebsstange 10 und/oder das Bedienelement 11 selbsttätig, insbesondere mittels der Rückstellung durch das Rückstellmittel 6, die Ausgangsstellung ein.

Alternativ oder zusätzlich zu dem Bedienelement 11 ist auch eine automatisierte beziehungsweise motorisierte Betätigung der Verdrängereinrichtung 3 möglich.

Die Pipettiervorrichtung 1 weist ein Einstellmittel 12 zum Einstellen eines Pipettiervolumens der Pipettiervorrichtung 1 auf.

Mit dem Begriff "Pipettiervolumen" wird das (Fluid-)Volumen bezeichnet, das bei einem Pipettiervorgang mittels der Pipettiervorrichtung 1 aufgenommen und/oder abgegeben werden kann.

Das Einstellmittel 12 ist durch einen Benutzer manuell bedienbar, insbesondere einhändig und/oder mit dem Daumen. Weiter ist das Einstellmittel 12 drehbar, insbesondere um eine Rotationsachse R. Die Rotationsachse R ist vorzugsweise identisch mit der Längsachse L der Pipettiervorrichtung 1. Hier sind jedoch auch andere Lösungen möglich.

Insbesondere kann also durch eine Drehung des Einstellmittels 12 das Pipettiervolumen eingestellt bzw. verändert werden. Das Einstellmittel 12 ist also vorzugsweise als Volumeneinstellrad bzw. Volumeneinstellknopf ausgebildet.

Vorzugsweise sind das Bedienelement 11 und das Einstellmittel 12 separate Bauteile und/oder unabhängig voneinander bewegbar. Das Bedienelement 11 ist vorzugsweise nicht mit dem Einstellmittel 12 gekoppelt. Insbesondere wird das Einstellmittel 12 bei einer Bewegung des Bedienelements 11 nicht bewegt und/oder wird das Bedienelement 11 bei einer Bewegung des Einstellmittels 12 nicht bewegt.

Das Bedienelement 11 ist vorzugsweise ausschließlich linear und/oder entlang der Längsachse L bewegbar, insbesondere relativ zu dem Einstellmittel 12. Vorzugsweise ist das Bedienelement 11 in Richtung des Einstellmittels 12 herunterdrückbar. Das Bedienelement 11 ist vorzugsweise nicht um die Längsachse L bzw. Rotationsachse R drehbar. Mit anderen Worten ist also vorzugsweise eine lineare Bewegung entlang der Längsachse L die einzig mögliche Bewegung des Bedienelements 11.

Das Einstellmittel 12 ist vorzugsweise ausschließlich drehbar, insbesondere um die Rotationsachse R bzw. Längsachse L und/oder relativ zu dem Bedienelement 11. Das Einstellmittel 12 ist vorzugsweise in einer festen axialen Position entlang der Längsachse L festgelegt bzw. fixiert und/oder nicht linear bzw. entlang der Längsachse L bewegbar. Mit anderen Worten ist also vorzugsweise eine Drehung um die Rotationssache R die einzig mögliche Bewegung des Einstellmittels 12.

Die Pipettiervorrichtung 1 weist mindestens einen Anschlag 13, 14 auf, wobei die Lage bzw. Position des Anschlags 13, 14, insbesondere in axialer Richtung, einstellbar ist. Die Lage bzw. Position des Anschlags 13, 14 legt einen Hub des Verdrängermittels 4 fest bzw. definiert diesen. Durch den Hub des Verdrängermittels 4 ist das Pipettiervolumen der Pipettiervorrichtung 1 definiert bzw. festgelegt.

Vorzugsweise ist eine Bewegung des Verdrängermittels 4 durch einen oberen Anschlag 13, einen unteren Anschlag 14 und wenigstens einen Gegenanschlag 15 der Antriebseinrichtung 6 und/oder des Verdrängermittels 4 begrenzt, so dass ein Hub des Verdrängermittels 4 definiert ist. Vorzugsweise ist der Hub der Antriebseinrichtung 6 bzw. der Antriebsstange 10 bzw. des Verdrängermittels 4 durch Veränderung der Lage bzw. Position des oberen Anschlags 13 und/oder des unteren Anschlag 14 veränderbar.

Vorzugsweise bildet der obere Anschlag 13 oder der untere Anschlag 14 den vorgenannten Anschlag 13, 14, dessen Lage einstellbar ist und den Hub des Verdrängermittels 4 definiert.

Der Gegenanschlag 15 kann insbesondere als Anschlagabschnitt der Antriebsstange 10 ausgebildet sein. Insbesondere ist der Gegenanschlag 15 einstückig mit der Antriebsstange 10 gebildet und/oder erstreckt sich von der Antriebsstange 10 in radialer Richtung und/oder ist flanschartig.

Beim Betätigen der Pipettiervorrichtung 1, der Verdrängereinrichtung 3 und/oder der Antriebseinrichtung 9 bzw. des Bedienelements 11, insbesondere beim Bewegen der Antriebsstange 10 in axialer Richtung, kommt es vorzugsweise zu einem Anschlagen des Gegenanschlags 15 am unteren Anschlag 14, was die axiale Bewegung bzw. Hubbewegung begrenzt.

Es ist möglich, dass der untere Anschlag 14 bei Aufwenden einer entsprechend hohen Kraft, durch die die unterhalb des unteren Anschlags 14 angeordnete Feder komprimiert wird, an dem Gegenanschlag 15 vorbeibewegbar ist. Diese Bewegung des unteren Anschlags 14 an dem Gegenanschlag 15 vorbei wird auch als "Überhub" bezeichnet und ermöglicht das Austreiben von Flüssigkeitsresten aus der Pipettiervorrichtung 1. Dies ändert jedoch nicht das Pipettiervolumen, das wie beschrieben durch den normalen Hub definiert ist, der durch den Kontakt zwischen dem unteren Anschlag 14 und dem Gegenanschlag15 begrenzt wird.

Bei der Rückstellung der Verdrängereinrichtung 3 bzw. der Antriebseinrichtung 9, insbesondere mittels des Rückstellmittels 6, kommt es vorzugsweise zwischen dem Gegenanschlag 15 und dem oberen Anschlag 13 zu einem Anschlagen in Einsaugrichtung, was die axiale Bewegung bzw. Hubbewegung begrenzt.

Beim Anschlagen des Gegenanschlags 15 an dem oberen Anschlag 13 ist vorzugsweise der unbetätigte Zustand erreicht und/oder das Volumen im Hohlraum maximal. Insbesondere ist das maximal aufnehmbare Fluidvolumen bzw. Pipettiervolumen durch die Position des oberen Anschlags 13 festgelegt.

Vorzugsweise ist die axiale Position des oberen Anschlags 13 verstellbar, so dass das maximal aufnehmbare Fluidvolumen bzw. das Pipettiervolumen bzw. das Volumen des Hohlraums einstellbar ist. Hierzu weist die Pipettiervorrichtung 1 bzw. die Antriebseinrichtung 9 das Einstellmittel 12 auf. Grundsätzlich ist es jedoch auch möglich, dass alternativ oder zusätzlich die Position des unteren Anschlags 14 verstellbar ist.

Die Pipettiervorrichtung 1 weist eine Kopplungseinrichtung 16 auf, die mit dem Einstellmittel 12 gekoppelt und/oder verbunden ist. Die Kopplungseinrichtung 16 ist vorzugsweise ein hülsenförmiges Bauteil, insbesondere eine Einstellhülse. Die Kopplungseinrichtung 16 ist vorzugsweise zumindest abschnittsweise zylindrisch ausgebildet. Die Kopplungseinrichtung 16 weist vorzugsweise eine Mittel- und/oder Längsachse auf, die vorzugsweise identisch mit der Längsachse L der Pipettiervorrichtung 1 ist.

Die Kopplungseinrichtung 16 ist derart mit dem Anschlag 13, 14 gekoppelt oder koppelbar, dass eine Drehung des Einstellmittels 12 eine Änderung der Lage des Anschlags 13, 14 mittels der Kopplungseinrichtung 16 bewirkt, so dass der Hub des Verdrängermittels 4 und damit das Pipettiervolumen geändert wird.

Vorzugsweise ist die axiale Position des oberen Anschlags 13 mittels der Kopplungseinrichtung 16, insbesondere mittels Drehen der Kopplungseinrichtung 16, insbesondere um die Längsachse L, einstellbar.

Vorzugsweise ist der obere Anschlag 13 an einer Hülse 31 angeordnet bzw. ausgebildet. Der obere Anschlag 13 ist vorzugsweise an einem axialen Ende, insbesondere unteren Ende, der Hülse 31 angeordnet bzw. ausgebildet. Die Hülse 31 ist vorzugsweise mit der Kopplungseinrichtung 16 gekoppelt bzw. koppelbar, sodass eine Drehung der Kopplungseinrichtung 16 eine axiale Verschiebung bzw. Änderung der Position des oberen Anschlags 13 bewirkt. Die Hülse 31 weist vorzugsweise ein Kopplungsmittel, insbesondere ein Außengewinde, zur Kopplung mit der Kopplungseinrichtung 16 oder einem mit der Kopplungseinrichtung 16 insbesondere drehfest verbundenem Bauteil auf. Im Darstellungsbeispiel weist die Pipettiervorrichtung 1 ein Kopplungsteil 32, insbesondere eine Hülse, auf, das drehfest mit der Kopplungseinrichtung 16 verbunden und/oder zwischen der Hülse 31 und der Kopplungseinrichtung 16 angeordnet ist. Das Kopplungsteil 32 weist ein Kopplungsmittel, insbesondere Innengewinde, auf, das mit dem Kopplungsmittel bzw. Außengewinde der Hülse 31 gekoppelt ist bzw. in Eingriff steht, insbesondere sodass eine Drehung der Kopplungseinrichtung 16 eine Veränderung der axialen Position des oberen Anschlags 13 bewirkt. Grundsätzlich ist es jedoch möglich, dass anstelle des Kopplungsteils 32 die Kopplungseinrichtung 16 das Kopplungsmittel bzw. Innengewinde aufweist bzw. direkt mit der Hülse 31 gekoppelt ist.

Die Pipettiervorrichtung 1 weist vorzugsweise eine, insbesondere im Gehäuse 2 angeordnete, Volumenanzeige 17 auf, die zum Anzeigen des eingestellten Pipettiervolumens ausgebildet ist. Die Volumenanzeige 17 kann eine Mehrzahl von Volumenanzeigerädern (Zahlenrädern) zur Anzeige eines Volumenwertes durch eine Öffnung oder ein Fenster im Gehäuse 2 umfassen. Die Volumenanzeige 17 ist mit der Kopplungseinrichtung 16 gekoppelt oder koppelbar. Insbesondere wird die Volumenanzeige 17 durch die Kopplungseinrichtung 16 bzw. (mittelbar) durch das Einstellmittel 12 angetrieben. Vorzugsweise weisen die Volumenanzeige 17 und die Kopplungseinrichtung 16 zueinander korrespondierende Kopplungsmittel auf, über die die die Volumenanzeige 17 mit der Kopplungseinrichtung 16 koppelbar ist, insbesondere Verzahnungsmittel wie Zahnkränze, Zahnräder o. dgl.

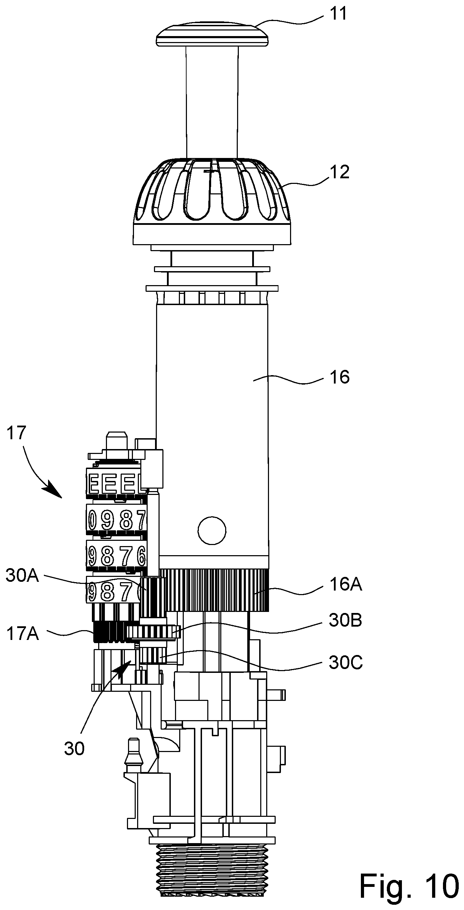

Fig. 10 zeigt eine mögliche Ausführungsform der Kopplungsmittel zum Koppeln der Kopplungseinrichtung 16 mit der Volumenanzeige 17. Im Darstellungsbeispiel gemäß Fig. 10 sind die Kopplungseinrichtung 16 und die Volumenanzeige 17 mittels einer Kopplungseinheit 30 miteinander gekoppelt bzw. koppelbar. Die Kopplungseinheit 30 weist vorzugsweise ein (erstes) Verzahnungsmittel bzw. Kopplungsmittel 30A, insbesondere ein Zahnrad, zum Koppeln mit einem dazu korrespondierenden Verzahnungsmittel bzw. Kopplungsmittel 16A, insbesondere einem Zahnrad, der Kopplungseinrichtung 16 auf. Das Kopplungsmittel 16A bzw. Zahnrad der Kopplungseinrichtung 16 ist vorzugsweise an der Außenseite der Kopplungseinrichtung 16 angeordnet bzw. ausgebildet. Weiter weist die Kopplungseinheit 30 vorzugsweise ein (zweites) Verzahnungsmittel bzw. Kopplungsmittel 30B, insbesondere ein Zahnrad, zum Koppeln mit einem dazu korrespondierenden Verzahnungsmittel bzw. Kopplungsmittel 17A, insbesondere einem Zahnrad, der Volumenanzeige 17 auf. Die Kopplungsmittel 30A, 30B der Kopplungseinheit 30 sind vorzugsweise koaxial und/oder übereinander angeordnet und vorzugsweise drehfest oder über ein Getriebe miteinander verbunden.

In der in Fig. 10 gezeigten Stellung der Kopplungseinheit 30, die auch als erste Stellung der Kopplungseinheit 30 bezeichnet werden kann, steht das (erste) Kopplungsmittel 30A der Kopplungseinheit 30 mit dem Kopplungsmittel 16A der Kopplungseinrichtung 16 in Eingriff und steht das (zweite) Kopplungsmittel 30B der Kopplungseinheit 30 mit dem Kopplungsmittel 17A der Volumenanzeige 17 in Eingriff, sodass die Volumenanzeige 17 mittels der Kopplungseinheit 30 mit der Kopplungseinrichtung 16 derart gekoppelt ist, dass eine Drehung der Kopplungseinrichtung 16 um die Längsachse L eine Verstellung der Volumenanzeige 17 bewirkt.

Die Kopplungseinheit 30 ist vorzugsweise axial, insbesondere parallel zur Längsachse L, bewegbar, insbesondere zwischen der zuvor beschriebenen ersten Stellung und einer zweiten Stellung.

In der zweiten Stellung ist die Kopplungseinheit 30 vorzugsweise nicht mit der Volumenanzeige 17 gekoppelt. Vorzugsweise steht in der zweiten Stellung das (zweite) Kopplungsmittel 30B also nicht im Eingriff mit der Volumenanzeige 17 bzw. deren Kopplungsmittel 17A.

In der zweiten Stellung der Kopplungseinheit 30 ist diese gegenüber der in Fig. 10 dargestellten ersten Stellung vorzugsweise nach unten verschoben. Vorzugsweise ist die Kopplungseinheit 30 in der zweiten Stellung (weiterhin) mit der Kopplungseinrichtung 16 gekoppelt. Vorzugsweise weist die Kopplungseinheit 30 ein (drittes) Verzahnungsmittel bzw. Kopplungsmittel 30C auf, das in der zweiten Stellung mit der nachfolgend erläuterten Verstellanzeige 18 gekoppelt ist, insbesondere sodass eine Drehung der Kopplungseinrichtung 16 in der zweiten Stellung der Kopplungseinheit 30 eine Verstellung der Verstellanzeige 18 bewirkt.

Weiter kann die Pipettiervorrichtung 1 eine Verstellanzeige 18 zum Anzeigen eines Justierwertes des Hubs des Verdrängermittels 3 aufweisen. Die Verstellanzeige 18 kann in einem Justierzustand verändert werden. Vorzugsweise weisen die Verstellanzeige 18 und die Kopplungseinrichtung 16 zueinander korrespondierende Kopplungsmittel auf, über die die Verstellanzeige 18 mit der Kopplungseinrichtung 16 koppelbar ist, insbesondere Verzahnungsmittel wie Zahnkränze, Zahnräder o. dgl.

Erfindungsgemäß weist die Pipettiervorrichtung 1 einen Schutzmechanismus 19 zum Begrenzen einer Drehmomentübertragung und/oder Kraftübertragung von dem Einstellmittel 12 auf die Kopplungseinrichtung 16 auf.

Der Schutzmechanismus 19 ist derart ausgebildet, dass unterhalb eines Schwellwerts eines auf das Einstellmittel 12 wirkenden Drehmoments und/oder einer auf das Einstellmittel 12 wirkenden Kraft das Einstellmittel 12 derart mit der Kopplungseinrichtung 16 gekoppelt ist, dass sich das Einstellmittel 12 und die Kopplungseinrichtung 16 gemeinsam bewegen und oberhalb des Schwellwerts die Drehmomentübertragung und/oder Kraftübertragung reduziert oder unterbrochen ist. Bevorzugt ist das Einstellmittel 12 unterhalb des Schwellwerts drehfest mit der Kopplungseinrichtung 16 gekoppelt.

Eine gemeinsame Bewegung des Einstellmittels 12 und der Kopplungseinrichtung 16 im Sinne der vorliegenden Erfindung ist insbesondere eine Bewegung in der gleichen Richtung und mit der gleichen Geschwindigkeit. Mit anderen Worten sind das Einstellmittel 12 und die Kopplungseinrichtung 16 also unterhalb des Schwellwerts vorzugsweise fest, insbesondere drehfest, miteinander verbunden und/oder derart miteinander gekoppelt, dass sie die gleiche Bewegung ausführen.

Auf diese Weise kann unterhalb des Schwellwerts mittels des Einstellmittels 12 die Kopplungseinrichtung 16 bewegt, insbesondere gedreht, und/oder das Pipettiervolumen der Pipettiervorrichtung 1 eingestellt bzw. geändert werden, während oberhalb des Schwellwerts eine Bewegung, insbesondere Drehung, des Einstellmittels 12 vorzugsweise nicht in einer Bewegung der Kopplungseinrichtung 16 resultiert und/oder keine oder zumindest nur reduzierte Kräfte bzw. Drehmomente auf weitere, mit der Kopplungseinrichtung 16 gekoppelte Bauteile der Pipettiervorrichtung, übertragen werden. So können Beschädigungen oder Fehlfunktionen durch zu hohen Krafteintrag über das Einstellmittel 12 verhindert werden.

Der Schutzmechanismus 19 dient insbesondere dazu bzw. ist insbesondere dazu ausgebildet, Beschädigungen der Volumenanzeige 17 durch zu hohen Krafteintrag beim Betätigen des Einstellmittels 12 zu verhindern.

Die Kopplungseinrichtung 16 ist vorzugsweise immer dann drehbar, wenn der Schutzmechanismus 19 die Kraft- bzw. Drehmomentübertragung von dem Einstellmittel 12 auf die Kopplungseinrichtung 16 nicht unterbricht. Die Pipettiervorrichtung 16 weist vorzugsweise keine Komponenten auf, die eine Drehung der Kopplungseinrichtung 16 blockieren oder blockieren können.

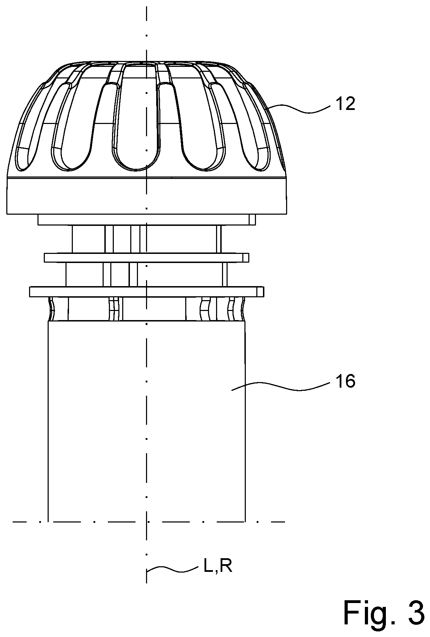

Nachfolgend werden verschiedene Ausführungsformen des Schutzmechanismus 19 insbesondere anhand der Figuren 3 bis 9 näher erläutert.

Vorzugsweise ist der Schutzmechanismus 19 als Rutschkupplung ausgebildet oder weist der Schutzmechanismus 19 eine Rutschkupplung auf. Mit anderen Worten sind das Einstellmittel 12 und die Kopplungseinrichtung 16 vorzugsweise durch eine Rutschkupplung miteinander gekoppelt bzw. verbunden, insbesondere sodass bei einem Drehmoment bzw. einer Kraft oberhalb des Schwellwerts das Einstellmittel 12 durchrutscht bzw. eine Drehung des Einstellmittels 12 nicht in einer Drehung der Kopplungseinrichtung 16 resultiert.

Der Schwellwert beträgt vorzugsweise mindestens 2 Ncm und/oder höchstens 12 Ncm. Insbesondere liegt der Schwellwert in einem Bereich zwischen 5 Ncm und 9 Ncm. Der Schwellwert hängt vorzugsweise von der genauen Ausgestaltung des Schutzmechanismus 19 bzw. der am Schutzmechanismus 19 beteiligten Bauteile ab und kann entsprechend konstruktiv festgelegt werden, beispielsweise durch die Abmessungen und/oder die Materialien der beteiligten Bauteile.

Der Schutzmechanismus 19 weist vorzugsweise mindestens ein Schutzelement 20 auf. Vorzugsweise ist das Schutzelement 20 durch ein separates Bauteil gebildet. Das Schutzelement 20 kann jedoch auch durch einen Abschnitt oder Bereich eines Bauteils der Pipettiervorrichtung 1, insbesondere des Einstellmittels 12 oder der Kopplungseinrichtung 16, gebildet sein.

Ein Schutzelement 20 im Sinne der vorliegenden Erfindung ist vorzugsweise ein Abschnitt, Bereich, Element oder Bauteil der Pipettiervorrichtung 1, der/das eine drehmoment- bzw. kraftabhängige Kopplung des Einstellmittels 12 mit der Kopplungseinrichtung 16 bewirkt.

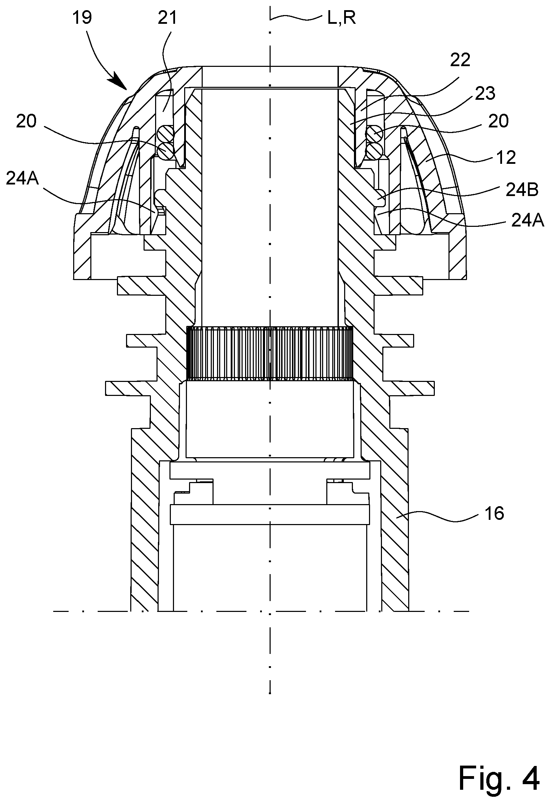

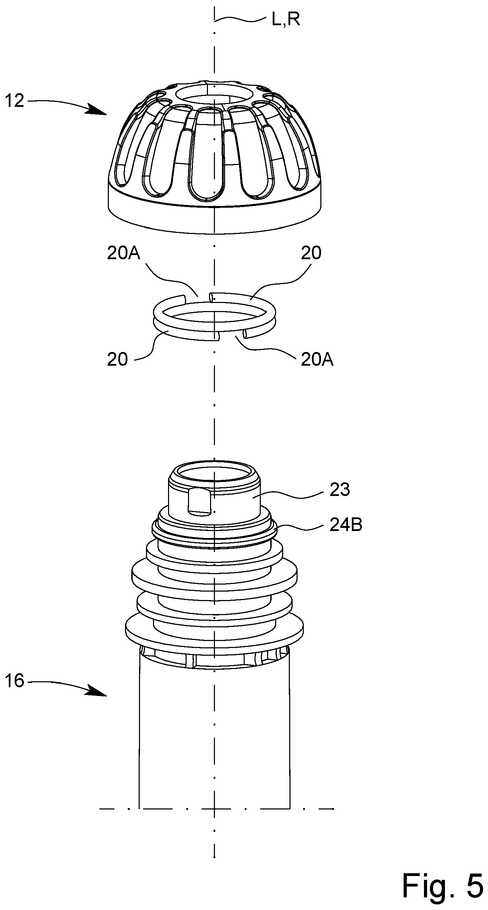

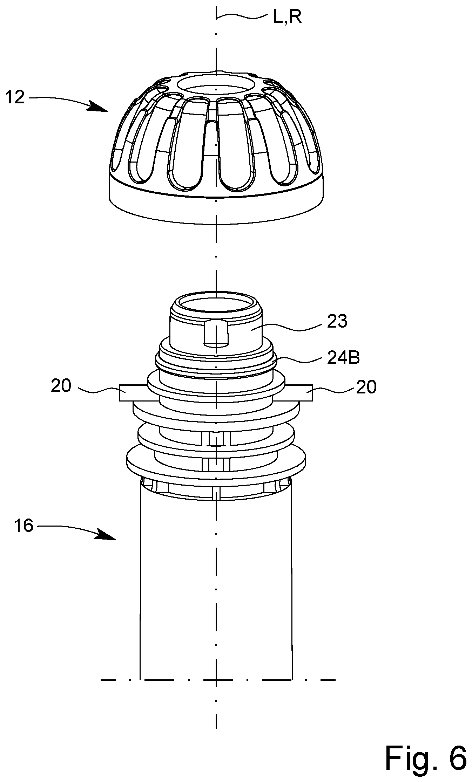

Nachfolgend wird zunächst insbesondere eine erste Ausführungsform des Schutzmechanismus 19 bzw. Schutzelements 20 genauer beschrieben, die in Fig. 4 und 5 dargestellt ist. Eine nähere Beschreibung der zweiten und dritten Ausführungsform, die in Fig. 6 bis 9 dargestellt sind, folgt im Anschluss daran.

Das Schutzelement 20 gemäß der ersten Ausführungsform ist vorzugsweise ringförmig und/oder gebogen. Insbesondere ist das Schutzelement 20 ein O-Ring und/oder Sprengring.

Ein Sprengring ist insbesondere ein Sicherungsring, welcher aus Draht mit gleichbleibendem Querschnitt besteht, welcher zu einem Ring gebogen ist. Der Sprengring kann genormt sein bzw. der DIN 9925:2019-12 entsprechen, aber auch ungenormte Sprengringe sind verwendbar.

Ein O-Ring ist insbesondere ein ringförmiges Dichtungselement, das vorzugsweise aus einem Elastomer besteht. Der O-Ring kann genormt sein bzw. der DIN ISO 3601 entsprechen, aber auch ungenormte Sprengringe sind verwendbar.

Bei der in den Figuren dargestellten Ausführungsform weist der Schutzmechanismus 19 zwei entlang der Längsachse L hintereinander angeordnete Schutzelemente 20 auf, die beide als Sprengring ausgebildet sind.

Es ist auch möglich, dass der Schutzmechanismus 19 mehrere ringförmige und/oder gebogene Schutzelemente 20 aufweist, die in der gleichen Ebene senkrecht zur Längsachse L angeordnet sind. Insbesondere kann der Schutzmechanismus 19 zwei oder mehr Schutzelemente 20 aufweisen, die jeweils als Ringsegmente bzw. Kreissegmente ausgebildet und in der gleichen Ebene senkrecht zur Längsachse L angeordnet sind.

Ein ringförmiges Schutzelement 20 im Sinne der vorliegenden Erfindung ist insbesondere ein gebogenes bzw. gekrümmtes Bauteil. Der Ring, durch den das ringförmige Schutzelement 20 gebildet ist, ist dabei nicht zwingend geschlossen, sondern es kann sich auch um einen offenen Ring bzw. ein Ringsegment oder Kreissegment handeln. Mit anderen Worten kann das Bauteil, welches das ringförmige Schutzelement 20 bildet, einen Umfangswinkel von weniger als 360° beschreiben.

Bei der bevorzugten, in den Figuren 4 und 5 dargestellten Ausführungsform ist das Schutzelement 20 durch einen Sprengring gebildet. Ein Sprengring ist ein insbesondere kreisförmig gebogenes Bauteil, beispielsweise ein gebogener Metalldraht, mit zwei Enden, die voneinander beabstandet sind, wie insbesondere in Fig. 5 dargestellt. Somit ist das Schutzelement 20 bzw. der Sprengring zwar ringförmig, aber es stellt keinen geschlossenen Ring, sondern einen offenen Ring dar.

Das Schutzelement 20 kann aus Kunststoff, Metall oder Keramik bestehen.

Das Schutzelement 20 ist insbesondere elastisch bzw. elastisch verformbar.

Vorzugsweise ist das Einstellmittel 12 mittels des Schutzelements 20 gegen die Kopplungseinrichtung 16 gedrückt oder umgekehrt, sodass das Einstellmittel 12 und die Kopplungseinrichtung 16 unterhalb des Schwellwerts reibschlüssig miteinander verbunden sind. Das Schutzelement 20 übt also vorzugsweise eine Kraft gegen das Einstellmittel 12 in Richtung der Kopplungseinrichtung 16 aus, insbesondere in radialer Richtung und/oder nach innen bzw. in Richtung der Längsachse L. Es ist jedoch auch möglich, dass das Schutzelement 20 eine Kraft gegen die Kopplungseinrichtung 16 in Richtung des Einstellmittels 12 ausübt, insbesondere in radialer Richtung und/oder nach außen.

Das Schutzelement 20 ist vorzugsweise innerhalb des Einstellmittels 12 angeordnet und/oder in dem Einstellmittel 12 aufgenommen. Dies ist insbesondere in Fig. 4 dargestellt. Hierdurch ist das Schutzelement 20 für den Benutzer vorzugsweise nicht sichtbar und/oder für den Benutzer unzugänglich und/oder gegen den Kontakt mit anderen Bauteilen geschützt, sodass insbesondere Fehlfunktionen des Schutzmechanismus 19 vermieden werden können.

Es ist jedoch auch möglich, dass das insbesondere ringförmige Schutzelement 20, abweichend von der Darstellung in den Figuren, an der Kopplungseinrichtung 16 angeordnet oder daran angebracht ist. Beispielsweise kann das Einstellmittel 12 in die Kopplungseinrichtung 16 eingesteckt bzw. eingeführt sein, insbesondere sodass ein oberes axiales Ende 23 der Kopplungseinrichtung 16 das Einstellmittel 12 oder einen Abschnitt davon umgibt. Das Schutzelement 20 kann dabei außen an dem oberen axialen Ende 23 der Kopplungseinrichtung 16 angeordnet sein, sodass es eine radial nach innen gerichtete Kraft auf die Kopplungseinrichtung 16 und das Schutzelement 20 ausübt und die Kopplungseinrichtung 16 und das Schutzelement 20 unterhalb des Schwellwerts durch die ausgeübte Kraft reibschlüssig miteinander verbunden sind.

Generell ist jedoch auch eine Wirkung des Schutzelements 20 in axialer Richtung möglich, insbesondere auch bei einer Wirkung des Schutzelements auf Basis einer Verrastung. Es kann also unterhalb des Schwellwerts mittels eines entsprechend ausgebildeten Schutzelements 20 das Einstellmittel 12 in axialer Richtung mit der Kopplungseinrichtung formschlüssig verbunden bzw. gekoppelt, insbesondere verrastet, und/oder reibschlüssig verbunden bzw. gekoppelt sein. Das Schutzelement 20 ist bei diesen Ausführungsformen nicht zwingend ringförmig ausgebildet und vorzugsweise nicht an der Innenseite oder Außenseite angeordnet, sondern an der Unter- oder Oberseite.

Eine weitere mögliche Ausführung des Schutzmechanismus 19 ist eine magnetische Kupplung, welche sowohl axial als auch radial wirken kann.

Das Einstellmittel 12 weist vorzugsweise einen Aufnahmeraum 21 zum Aufnehmen des Schutzelements 20 auf. Der Aufnahmeraum 21 ist vorzugsweise als ringförmiger bzw. zylindrischer Spalt ausgebildet. Insbesondere ist der Aufnahmeraum 21 koaxial zu der Längsachse L angeordnet. Das Schutzelement 20 ist vorzugsweise in dem Aufnahmeraum 21 angeordnet. Der Aufnahmeraum 21 ist vorzugsweise durch zwei zumindest im Wesentlichen zylindrische, koaxial zueinander angeordnete und sich axial erstreckende Abschnitte des Einstellmittels 12 gebildet bzw. in radialer Richtung begrenzt.

Vorzugsweise weist das Einstellmittel 12 einen, insbesondere zylindrisch ausgebildeten, Kopplungsabschnitt 22 auf, der zur Kopplung des Einstellmittels 12 mit der Kopplungseinrichtung 16 ausgebildet ist. Vorzugsweise umgibt das Schutzelement 20 den Kopplungsabschnitt 22, die insbesondere im Figur 4 dargestellt. Es ist jedoch auch möglich, dass der Kopplungsabschnitt 22 das Schutzelement 20 umgibt. Der Kopplungsabschnitt 22 ist vorzugsweise koaxial zu dem Schutzelement 20 und/oder der Längsachse L angeordnet.

Der Kopplungsabschnitt 22 bildet vorzugsweise eine innere Wand bzw. Begrenzung des Aufnahmeraums 21.

Das Einstellmittel 12 ist vorzugsweise an einem axialen Ende 23 der Kopplungseinrichtung 16 angeordnet, insbesondere an dem oberen bzw. dem Bedienelement 11 zugewandten axialen Ende 23, wie in den Figuren dargestellt. Vorzugsweise umgibt das Einstellmittel 12 das axiale Ende 23. Insbesondere ist das Einstellmittel 12 auf die Kopplungseinrichtung 16 bzw. das axiale Ende 23 aufgesteckt und/oder darin eingesteckt. Das axiale Ende 23 stellt vorzugsweise einen zumindest im Wesentlichen rotationssymmetrischen, bevorzugt zylindrischen Abschnitt der Kopplungseinrichtung 16 dar. Vorzugsweise ist das axiale Ende 23 koaxial zu der Längsachse L, dem Einstellmittel 12 bzw. Kopplungsabschnitt 22, dem Aufnahmeraum 21 und/oder dem Schutzelement 20 angeordnet.

Besonders bevorzugt ist also das Einstellmittel 12 mittels des zylindrischen Kopplungsabschnitts 22 auf die Kopplungseinrichtung 16, insbesondere dessen axiales Ende 23, aufgesteckt, wobei das Schutzelement 20 den Kopplungsabschnitt 22 gegen das axiale Ende 23 drückt. Hierdurch ist das Einstellmittel 12 mit der Kopplungseinrichtung 16 aufgrund einer reibschlüssigen Verbindung zwischen dem Kopplungsabschnitt 22 und dem axialen Ende 23 gekoppelt, sodass bei Drehmomenten unterhalb des vorgenannten Schwellwerts eine drehfeste Verbindung zwischen dem Einstellmittel 12 und der Kopplungseinrichtung 16 besteht. Bei Drehmomenten oberhalb des Schwellwerts rutscht die durch das Schutzelement 20, den Kopplungsabschnitt 22 und das axiale Ende 23 gebildete Rutschkupplung durch, sodass die reinschlüssige Verbindung bzw. drehfeste Kopplung gelöst ist/wird und eine Drehung des Einstellmittels 12 nicht auf die Kopplungseinrichtungen 16 übertragen wird.

Bei dem ringförmigen Schutzelement 20 beruht die Kopplung des Einstellmittels 12 mit der Kopplungseinrichtung 16 vorzugsweise auf der radialen Kraftwirkung des Schutzelements 20. Die radiale Kraftwirkung kann zum einem durch das Einsetzen des Schutzelements 20 in dem Aufnahmeraum 21 bzw. Anbringen des Schutzelements 20 an dem Kopplungsabschnitt 22 unter hervorgerufen werden. Zum anderen kann jedoch auch durch das Einsetzen des insbesondere elastischen Schutzelements 20 in den Aufnahmeraum 21 unter Kompression eine radiale Kraftwirkung entstehen.

Für den Fall, dass der Kopplungsabschnitt 22 das Schutzelement 20 umgibt, drückt der Aufnahmeraum 21 durch das komprimierte Schutzelement 20 nach außen gegen die Kopplungseinrichtung 16.

Es ist, wie voranstehend bereits erläutert, auch eine Ausführungsform möglich, bei welcher die Kopplungseinrichtung 16 den Aufnahmeraum 21 aufweist und das Einstellmittel 12 in die Kopplungseinrichtung 16 eingesteckt wird.

Vorzugsweise weist die Innenwand des Aufnahmeraums 21 (in den Figuren nicht dargestellte) Schlitze auf, die eine zusätzliche Elastizität der Innenwand bewirken, so dass diese durch die Kraftwirkung des Schutzelements 20 besser gegen die Kopplungseinrichtung 16 gedrückt werden kann.

Das Einstellmittel 12 und die Kopplungseinrichtung 16 weisen vorzugsweise einander zugeordnete Rastelemente 24A, 24B auf. Mittels der Rastelemente 24A, 24B ist das Einstellmittel 12 vorzugsweise gegen Entfernen von der Kopplungseinrichtung 16 in axialer Richtung bzw. in Richtung der Längsachse L gesichert, insbesondere durch eine zwischen den Rastelementen 24A, 24B gebildete formschlüssige Verbindung bzw. Rastverbindung. Dies verhindert ein (unbeabsichtigtes) Entfernen des Einstellmittels 12 von der Kopplungseinrichtung 16.

Das Rastelement 24B der Kopplungseinrichtung 16 ist vorzugsweise unterhalb des axialen Endes 23 angeordnet.

Insbesondere ist das Rastelement 24B der Kopplungseinrichtung 16 durch einen Abschnitt gebildet, der einen zylindrischen Abschnitt der Kopplungseinrichtung 16 umläuft und/oder radial von diesem absteht.

Das Rastelement 24A des Einstellmittels 12 ist vorzugsweise an einer axialen Verlängerung des Abschnitts, der eine äußere Begrenzung des Aufnahmeraums 21 bildet, angeordnet bzw. ausgeformt. Das Rastelement 24A ist dazu ausgebildet, das Rastelement 24B der Kopplungseinrichtung 16 zu hintergreifen. Hierzu weist das Rastelement 24A eine entsprechende Form auf. Das Rastelement 24A ist vorzugsweise als Rasthaken bzw. hakenförmig ausgebildet.

Vorzugsweise weist das Einstellmittel 12 mehrere in Umfangsrichtung versetzt angeordnete Rastelemente 24A auf. Im Darstellungsbeispiel weist das Einstellmittel 12 sechs baugleiche Rastelemente 24A auf, die in Umfangsrichtung jeweils um 60° versetzt sind.

Die Pipettiervorrichtung 1 bzw. der Schutzmechanismus 19 kann zwei oder mehr Schutzelemente 20 aufweisen. Die voranstehenden Erläuterungen bezüglich des Schutzelements 20 gelten vorzugsweise für alle Schutzelemente 20 der Pipettiervorrichtung 1 bzw. des Schutzmechanismus 19. Wenn der Schutzmechanismus 19 zwei oder mehr Schutzelemente 20 aufweist, sind diese vorzugsweise baugleich.

Bei der in den Figuren 4 und 5 dargestellten, besonders bevorzugten Ausführungsform weist der Schutzmechanismus 19 genau zwei Schutzelemente 20 auf. Die Schutzelemente 20 sind dabei jeweils als Sprengring ausgebildet und so angeordnet, dass sich die Freiräume 20A, also die jeweils zwischen den beiden Enden eines Sprengrings gelegenen Bereiche, der Sprengringe bezüglich der Längsachse L diametral gegenüber liegen. Dies ist insbesondere in Fig. 5 dargestellt.

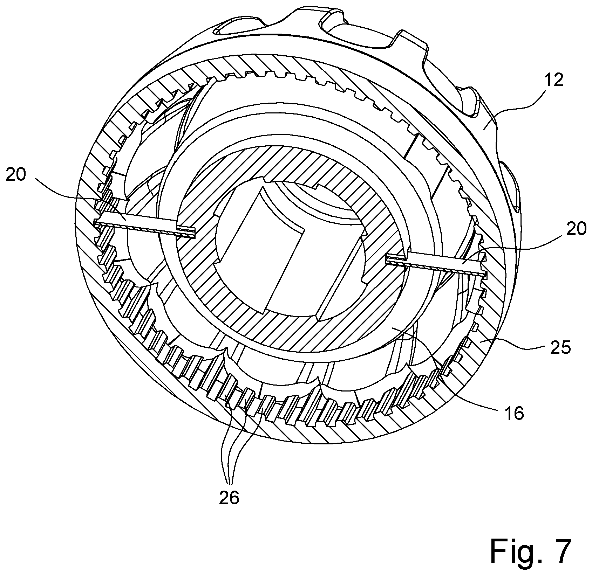

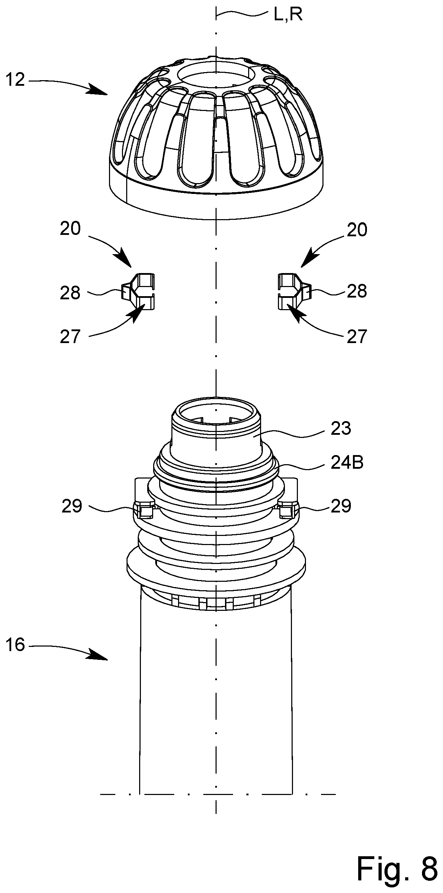

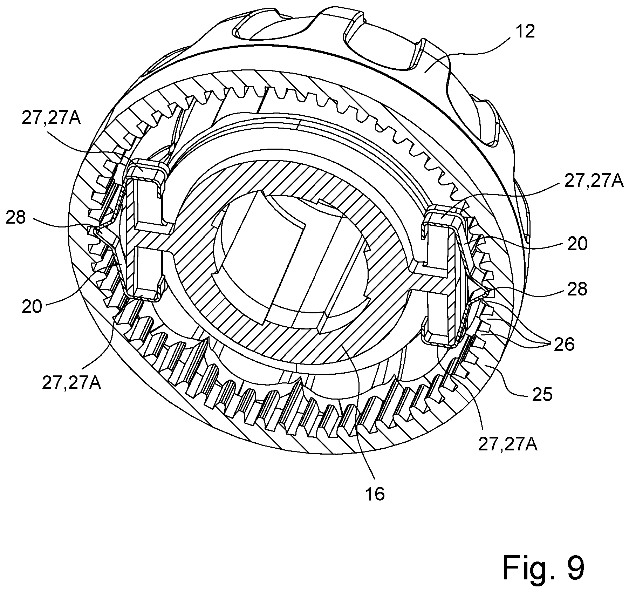

Nachfolgend wird näher auf eine zweite und dritte Ausführungsform eingegangen, die in den Figuren 6 bis 9 dargestellt sind. Fig. 6 und 7 zeigen verschiedene Darstellungen der zweiten Ausführungsform, während Fig. 8 und 9 verschiedene Darstellungen der dritten Ausführungsform zeigen.

Die vorherigen Ausführungen mit Bezug auf die erste Ausführungsform gelten auch für die zweite und dritte Ausführungsform, sofern sich keine Inkompatibilitäten oder offensichtliche Widersprüche ergeben oder explizit etwas anderes erwähnt ist.

Bei der zweiten und dritten Ausführungsform wird die Kopplung des Einstellmittels 12 mit der Kopplungseinrichtung 16 unterhalb des Schwellwerts vorzugsweise durch eine (lösbare bzw. überwindbare) formschlüssige Verbindung, insbesondere Verrastung, bewirkt. Mit anderen Worten ist das Einstellmittel 12 bei diesen Ausführungsformen also - zumindest mittelbar - mit der Kopplungseinrichtung 16 formschlüssig verbunden bzw. verrastet.

Vorzugsweise weist der Schutzmechanismus 19 bei der zweiten und dritten Ausführungsform ebenfalls mindestes ein Schutzelement 20 auf. Insbesondere wird durch das Schutzelement 20 unterhalb des Schwellwerts die Kopplung, insbesondere formschlüssige Verbindung bzw: Verrastung, des Einstellmittels 12 mit der Kopplungseinrichtung 16 vermittelt.

Vorzugsweise ist also das Schutzelement 20 mit dem Einstellmittel 12 oder der Kopplungseinrichtung 16 lösbar gekoppelt, insbesondere verrastet.

Das Schutzelement 20 ist vorzugsweise als separates Bauteil ausgebildet, kann grundsätzlich jedoch auch einstückig mit dem Einstellmittel 12 oder der Kopplungseinrichtung 16 ausgebildet sein bzw. einen Abschnitt des Einstellmittels 12 oder der Kopplungseinrichtung 16 bilden.

Das Schutzelement 20 ist vorzugsweise zwischen dem Einstellmittel 12 bzw. einer Innenseite des Einstellmittels 12 und der Kopplungseinrichtung 16 bzw. einer Außenseite der Kopplungseinrichtung 16 angeordnet.

Vorzugsweise weist das Einstellmittel 12 oder die Kopplungseinrichtung 16 ein Verzahnungsmittel 25, insbesondere einen Zahnkranz, auf. Das Schutzelement 20 greift vorzugsweise in das Einstellmittel 12 oder die Kopplungseinrichtung 16 ein, insbesondere in das Verzahnungsmittel 25. Durch das Eingreifen des Schutzelements 20 in das Verzahnungsmittel 25 wird vorzugsweise die genannte Kopplung, insbesondere (formschlüssige) Verbindung bzw. Verrastung, des Einstellmittels 20 mit der Kopplungseinrichtung 16 realisiert.

Ein Verzahnungsmittel 25 im Sinne der vorliegenden Erfindung ist insbesondere ein Bauteil oder Abschnitt mit mehreren Zähnen 26. In den Darstellungsbeispielen ist das Verzahnungsmittel 25 jeweils als Zahnkranz ausgebildet. Grundsätzlich kann das Verzahnungsmittel 25 jedoch auch anders ausgebildet sein, beispielsweise als Zahnstange oder Zahnrad.

Das Schutzelement 20 ist vorzugsweise an der Kopplungseinrichtung 16 oder dem Einstellmittel 12 gehalten bzw. befestigt, insbesondere durch eine formschlüssige Verbindung. Alternativ oder zusätzlich kann jedoch auch eine andere Art der Befestigung vorgesehen sein, beispielsweise ein Verkleben und/oder einen reibschlüssige Verbindung.

Vorzugsweise ist das Schutzelement 20 außen an der Kopplungseinrichtung 16 angeordnet.

Vorzugsweise weist also eines der Bauteile Einstellmittel 12 und Kopplungseinrichtung 16 das Schutzelement 20 auf, während das Schutzelement 20 in das andere der beiden Bauteile eingreift, insbesondere wobei das andere der beiden Bauteile das Verzahnungsmittel 25 aufweist. Im Darstellungsbeispiel weist die Kopplungseinrichtung 16 das Schutzelement 20 auf und greift in das Einstellmittel 12 bzw. ein Verzahnungsmittel 25 des Einstellmittels 12 ein. Grundsätzlich ist jedoch eine umgekehrte Anordnung möglich, bei der das Einstellmittel 12 das Schutzelement 20 aufweist und in die Kopplungseinrichtung 16 bzw. ein Verzahnungsmittel 25 der Kopplungseinrichtung 16 eingreift.

Falls das Einstellmittel 12 das Verzahnungsmittel 25 aufweist, ist dieses vorzugsweise an einer Innenseite des Einstellmittels 12 angeordnet und/oder als innenseitiger Zahnkranz ausgebildet. Dies ist in den Figuren 7 und 9 dargestellt. Falls die Kopplungseinrichtung 16 das Verzahnungsmittel 25 aufweist, ist dieses vorzugsweise an einer Außenseite der Kopplungseinrichtung 16 angeordnet und/oder als außenseitiger Zahnkranz ausgebildet.

Vorzugsweise ist das Schutzelement 20 oder zumindest ein Abschnitt davon elastisch und/oder federnd ausgebildet.

Das Schutzelement 20 ist vorzugsweise verformbar bzw. verbiegbar, insbesondere reversibel verformbar bzw. verbiegbar, insbesondere sodass oberhalb des Schwellwerts die Kraft- bzw. Drehmomentübertragung von dem Einstellmittel 12 auf die Kopplungseinrichtung 16 reduziert oder unterbrochen ist/wird.

Besonders bevorzugt ist das Schutzelement 20 derart (elastisch) verformbar, dass bei Erreichen oder Überschreiten des Schwellwerts die durch das Schutzelement 20 vermittelte Kopplung des Einstellmittels 12 mit der Kopplungseinrichtung 16 aufgrund der Verformung des Schutzelements 20 aufgehoben wird.

Der Schwellwert ist vorzugsweise durch die konkrete Ausgestaltung des Schutzelements 20 und/oder des Zahnkranzes 25 einstellbar.

Das Schutzelement 20 und vorzugsweise das Verzahnungsmittel 25 sind also vorzugsweise dazu ausgebildet und/oder derart aufeinander abgestimmt, dass unterhalb des Schwellwerts eine (drehfeste) Kopplung des Einstellmittels 12 mit der Kopplungseinrichtung 16 vorliegt, insbesondere durch das Eingreifen des Schutzelements 20 in das Verzahnungsmittel 25, und oberhalb des Schwellwerts die Kopplung aufgehoben oder reduziert wird, insbesondere indem sich das Schutzelement 20 derart verformt/verbiegt, dass ein oder mehrere Zähne 26 des Verzahnungsmittels 25 sich an dem Schutzelement 20 vorbeibewegen bzw. "durchrutschen".

Bei der zweiten und dritten Ausführungsform besteht das Schutzelement 20 vorzugsweise aus Metall.

Bei der zweiten Ausführungsform ist das Schutzelement 20 vorzugsweise als Blattfeder ausgebildet. Insbesondere ist das Schutzelement 20 bzw. die Blattfeder flach, länglich und/oder zumindest im Wesentlichen rechteckig. Das Schutzelement 20 bzw. die Blattfeder erstreckt sich vorzugsweise zumindest im Wesentlichen radial und/oder in einer Ebene, die parallel zur Längsachse L und/oder Rotationsachse R ist und/oder diese enthält. Vorzugsweise weist die Kopplungseinrichtung 16 eine insbesondere schlitzartige Ausnehmung auf, in der das Schutzelement 20 bzw. die Blattfeder angeordnet, gehalten und/oder befestigt ist.

Bei der dritten Ausführungsform ist das Schutzelement 20 vorzugsweise als Stanzbiegeteil ausgebildet.

Vorzugsweise weist bei der dritten Ausführungsform das Schutzelement 20 bzw. Stanzbiegeteil einen Befestigungsabschnitt 27 und einen Eingriffsabschnitt 28 auf. Vorzugsweise weisen der Befestigungsabschnitt 27 und der Eingriffsabschnitt 28 unterschiedliche geometrische Formen auf.

Der Befestigungsabschnitt 27 des Schutzelements 20 ist vorzugsweise zur formschlüssigen Verbindung mit einem Befestigungsabschnitt 29 der Kopplungseinrichtung 16 oder des Einstellmittels 12 ausgebildet. Der Befestigungsabschnitt 29 ist vorzugsweise korrespondierend und/oder komplementär zu dem Befestigungsabschnitt 27 des Schutzelements 20 ausgebildet bzw. geformt. Im Darstellungsbeispiel ist der Befestigungsabschnitt 29 außen an der Kopplungseinrichtung 16 angeordnet und insbesondere einstückig mit der Kopplungseinrichtung 16 ausgebildet.

Vorzugsweise weist der Befestigungsabschnitt 27 zwei insbesondere gleichartig ausgebildete, symmetrische und/oder einander gegenüberliegende, insbesondere etwa U-förmige, Befestigungselemente 27A auf. Der Eingriffsabschnitt 28 ist vorzugsweise zwischen diesen Befestigungselementen 27A des Befestigungsabschnitts 27 angeordnet.

Der Eingriffsabschnitt 28 ist vorzugsweise zum Eingreifen in das Verzahnungsmittel 25 ausgebildet. Vorzugsweise ragt der Eingriffsabschnitt 28 in Richtung des Verzahnungsmittels 25 hervor und/oder ist der Eingriffsabschnitt 28 zwischen zwei Zähnen 26 des Verzahnungsmittels 25 anordenbar, sodass der Eingriffsabschnitt 28 formschlüssig in das Verzahnungsmittel 25 eingreift und unterhalb des Schwellwerts die Kopplung bewirkt.

Der Eingriffsabschnitt 28 weist vorzugsweise zwei insbesondere symmetrisch und/oder schräg zueinander angeordnete Schenkel auf und/oder ist vorzugsweise spitz und/oder V-förmig ausgebildet.

Der Eingriffsabschnitt 28 ist vorzugsweise elastisch und/oder federnd ausgebildet, insbesondere sodass oberhalb des Schwellwerts die Kraft- bzw. Drehmomentübertragung von dem Einstellmittel 12 auf die Kopplungseinrichtung 16 reduziert oder unterbrochen ist/wird.

Vorzugsweise ist das Schutzelement 20 bzw. Stanzbiegeteil aus einem vorzugsweise ausgestanzten und/oder flachem Metallstück bzw. Blech hergestellt, dass derart verbogen bzw. verformt wird, dass es den Befestigungsabschnitt 27 und den Eingriffsabschnitt 28 aufweist.

Das Schutzelement 20 bzw. Stanzbiegeteil ist vorzugsweise klammerartig und/oder symmetrisch ausgebildet.

Im Darstellungsbeispiel ist das Schutzelement 20 als eine Art Klammer ausgebildet, die mittels des Befestigungsabschnitts 27 formschlüssig und/oder reibschlüssig bzw. klemmend an der Kopplungseinrichtung 16 bzw. deren Befestigungsabschnitt 29 gehalten bzw. befestigbar ist und mittels eines radial nach außen ragenden bzw. vorstehenden Eingriffsabschnitts 28 in das Verzahnungsmittel 25 des Einstellmittels 12 eingreift.

Bei der zweiten und dritten Ausführungsform weist der Schutzmechanismus 19 vorzugsweise zwei Schutzelemente 20 auf, die insbesondere baugleich sind und/oder symmetrisch angeordnet sind. Die Schutzelemente 20 sind vorzugsweise auf gegenüberliegenden Seiten der Längsachse L und/oder Rotationsachse R, angeordnet. Die voranstehenden Erläuterungen bezüglich des Schutzelements 20 der zweiten und/oder dritten Ausführungsform gelten vorzugsweise für alle Schutzelemente 20 bei diesen Ausführungsformen.

Einzelne Aspekte der voranstehend beschriebenen Erfindung können unabhängig voneinander, aber auch in beliebiger Kombination realisiert werden und vorteilhaft sein.

### Bezugszeichenliste:

- 1: Pipettiervorrichtung
- 1B: Pipettenspitze
- 2: Gehäuse
- 3: Verdrängereinrichtung
- 4: Verdrängermittel
- 5: Verdrängergehäuse
- 6: Rückstellmittel
- 7: Schaft
- 8: Öffnung
- 9: Antriebseinrichtung
- 10: Antriebsstange
- 11: Bedienelement
- 12: Einstellmittel
- 13: oberer Anschlag
- 14: unterer Anschlag
- 15: Gegenanschlag
- 16: Kopplungseinrichtung
- 16A: Kopplungsmittel von 16
- 17: Volumenanzeige
- 17A: Kopplungsmittel von 17
- 18: Verstellanzeige
- 19: Schutzmechanismus
- 20: Schutzelement
- 20A: Freiraum von 20
- 21: Aufnahmeraum
- 22: Kopplungsabschnitt
- 23: axiales Ende von 16
- 24A: Rastelement von 12
- 24B: Rastelement von 16
- 25: Verzahnungsmittel
- 26: Zähne von 25
- 27: Befestigungsabschnitt von 20
- 27A: Befestigungselement von 27
- 28: Eingriffsabschnitt von 20
- 29: Befestigungsabschnitt von 12/16
- 30: Kopplungseinheit
- 30A: (erstes) Kopplungsmittel von 30
- 30B: (zweites) Kopplungsmittel von 30
- 30C: (drittes) Kopplungsmittel von 30
- 31: Hülse
- 32: Kopplungsteil

- L: Längsachse
- R: Rotationsachse

## Patentansprüche

1. Pipettiervorrichtung (1) zum Aufnehmen und Abgeben von Fluidvolumina, aufweisend
- eine Verdrängereinrichtung (3), insbesondere eine Kolben-Zylinder-Anordnung, mit einem Verdrängermittel (4), insbesondere einem Kolben, und einem Verdrängergehäuse (5), insbesondere einem Zylinder,
- ein durch einen Benutzer manuell bedienbares Einstellmittel (12) zum Einstellen eines Pipettiervolumens der Pipettiervorrichtung (1), wobei das Einstellmittel (12) zum Einstellen des Pipettiervolumens, insbesondere um eine Längsachse (L) der Pipettiervorrichtung (1), drehbar ist,
- einen Anschlag (13, 14), dessen Lage einstellbar ist und einen Hub des Verdrängermittels (4) festlegt, wobei durch den Hub des Verdrängermittels (4) das Pipettiervolumen definiert ist, und
- eine mit dem Einstellmittel (12) gekoppelte Kopplungseinrichtung (16) zur Kopplung des Einstellmittels (12) mit dem Anschlag (13, 14),
wobei die Kopplungseinrichtung (16) derart mit dem Anschlag (13, 14) gekoppelt oder koppelbar ist, dass eine Drehung des Einstellmittels (12) eine Änderung der Lage des Anschlags (13, 14) mittels der Kopplungseinrichtung (16) bewirkt, so dass der Hub des Verdrängermittels (4) und damit das Pipettiervolumen geändert wird,
wobei die Pipettiervorrichtung (1) einen Schutzmechanismus (19) zum Begrenzen einer Drehmoment- und/oder Kraftübertragung von dem Einstellmittel (12) auf die Kopplungseinrichtung (16) aufweist, sodass unterhalb eines Schwellwerts eines auf das Einstellmittel (12) wirkenden Drehmoments und/oder einer auf das Einstellmittel (12) wirkenden Kraft das Einstellmittel (12) mit der Kopplungseinrichtung (16) derart gekoppelt ist, dass sich das Einstellmittel (12) und die Kopplungseinrichtung (16) gemeinsam bewegen und oberhalb des Schwellwerts die Drehmoment- und/oder Kraftübertragung reduziert oder unterbrochen ist.

2. Pipettiervorrichtung nach Anspruch 1, wobei der Schutzmechanismus (19) als Rutschkupplung ausgebildet ist oder eine Rutschkupplung aufweist.

3. Pipettiervorrichtung nach Anspruch 1 oder 2, wobei der Schwellwert mindestens 2 Ncm und/oder höchstens 12 Ncm, insbesondere zwischen 5 Ncm und 9 Ncm, beträgt.

4. Pipettiervorrichtung nach einem der voranstehenden Ansprüche, wobei der Schutzmechanismus (19) mindestens ein Schutzelement (20) aufweist, vorzugsweise wobei das Schutzelement (20) innerhalb der Pipettiervorrichtung (1) angeordnet ist und/oder eine drehmoment- bzw. kraftabhängige Kopplung des Einstellmittels (12) mit der Kopplungseinrichtung (16) bewirkt.

5. Pipettiervorrichtung nach Anspruch 4, wobei das Schutzelement (20) innerhalb des Einstellmittels (12) angeordnet und/oder in dem Einstellmittel (12) aufgenommen und/oder zwischen dem Einstellmittel (12) und der Kopplungseinrichtung (16) angeordnet ist.

6. Pipettiervorrichtung nach Anspruch 4 oder 5, wobei das Einstellmittel (12) einen vorzugweise zylindrischen Kopplungsabschnitt (22) zur Kopplung des Einstellmittels (12) mit der Kopplungseinrichtung (16) aufweist, vorzugsweise wobei das Schutzelement (20) den Kopplungsabschnitt (22) umgibt oder umgekehrt.

7. Pipettiervorrichtung nach einem der Ansprüche 4 bis 6, wobei das Schutzelement (20) ringförmig ist, insbesondere wobei das Schutzelement (20) ein O-Ring und/oder Sprengring ist.

8. Pipettiervorrichtung nach einem der Ansprüche 4 bis 7, wobei mittels des Schutzelements (20) das Einstellmittel (12) gegen die Kopplungseinrichtung (16) gedrückt ist, sodass das Einstellmittel (12) und die Kopplungseinrichtung (16) unterhalb des Schwellwerts reibschlüssig miteinander verbunden sind.

9. Pipettiervorrichtung nach einem der Ansprüche 4 bis 8, wobei das Einstellmittel (12) einen Aufnahmeraum (21) aufweist, der als ringförmiger Spalt ausgebildet ist und in dem das Schutzelement (20) aufgenommen ist.

10. Pipettiervorrichtung nach Anspruch 4 oder 5, wobei das Schutzelement (20) mit dem Einstellmittel (12) oder der Kopplungseinrichtung (16) lösbar gekoppelt, insbesondere verrastet, ist, vorzugsweise wobei das Einstellmittel (12) oder die Kopplungseinrichtung (16) ein Verzahnungsmittel (25) aufweist und/oder das Schutzelement (20) in das Einstellmittel (12) oder die Kopplungseinrichtung (16), insbesondere das Verzahnungsmittel (25), eingreift.

11. Pipettiervorrichtung nach Anspruch 10, wobei das Schutzelement (20) an der Kopplungseinrichtung (16) oder dem Einstellmittel (12), insbesondere formschlüssig, gehalten bzw. befestigt ist.

12. Pipettiervorrichtung nach Anspruch 10 oder 11, wobei das Schutzelement (20) derart verformbar ist, dass bei Erreichen oder Überschreiten des Schwellwerts die durch das Schutzelement (20) vermittelte Kopplung des Einstellmittels (12) mit der Kopplungseinrichtung (16) durch eine Verformung des Schutzelements (20) aufgehoben wird, vorzugsweise wobei das Schutzelement (20) reversibel verformbar, elastisch und/oder federnd ausgebildet ist.

13. Pipettiervorrichtung nach einem der Ansprüche 10 bis 12, wobei das Schutzelement (20) aus Metall besteht und/oder elastisch und/oder federnd ausgebildet ist, vorzugsweise wobei das Schutzelement (20) eine Blattfeder oder ein Stanzbiegeteil ist.

14. Pipettiervorrichtung nach einem der voranstehenden Ansprüche, wobei das Einstellmittel (12) an einem axialen Ende (23) der Kopplungseinrichtung (16) angeordnet ist, insbesondere auf das axiale Ende (23) aufgesteckt und/oder in das axiale Ende (23) eingesteckt ist.

15. Pipettiervorrichtung nach einem der voranstehenden Ansprüche, wobei das Einstellmittel (12) und die Kopplungseinrichtung (16) einander zugeordnete Rastelemente (24A, 24B) aufweisen, wobei das Einstellmittel (12) mittels der Rastelemente (24A, 24B) formschlüssig gegen Entfernen von der Kopplungseinrichtung (16) in Richtung einer Längsachse (L) der Kopplungseinrichtung (16) bzw. Pipettiervorrichtung (1) gesichert ist.

16. Pipettiervorrichtung nach einem der voranstehenden Ansprüche, wobei die Kopplungseinrichtung (16) ein hülsenförmiges Bauteil ist.

17. Pipettiervorrichtung nach einem der voranstehenden Ansprüche, wobei die Kopplungseinrichtung (16), insbesondere über ein Verzahnungsmittel, mit einer Volumenanzeige (17) zum Anzeigen des eingestellten Pipettiervolumens gekoppelt oder koppelbar ist, vorzugsweise wobei der Schutzmechanismus (19) dazu dient bzw. dazu ausgebildet ist, Beschädigungen der Volumenanzeige (17) durch zu hohen Krafteintrag beim Betätigen des Einstellmittels (12) zu verhindern.

18. Pipettiervorrichtung nach einem der voranstehenden Ansprüche, wobei die Pipettiervorrichtung (1) aufweist:
- eine Antriebseinrichtung (9) zum Bewegen des Verdrängermittels (4) im Verdrängergehäuse (5), wobei eine Bewegung des Verdrängermittels (4) durch einen oberen Anschlag (13), einen unteren Anschlag (14) und wenigstens einen Gegenanschlag (15) der Antriebseinrichtung (9) und/oder des Verdrängermittels (4) begrenzt ist, so dass der Hub des Verdrängermittels (4) definiert ist,
wobei der Anschlag (13, 14), dessen Lage einstellbar ist und den Hub des Verdrängermittels (4) definiert, durch den oberen Anschlag (13) oder den unteren Anschlag (14) gebildet ist.

19. Pipettiervorrichtung nach einem der voranstehenden Ansprüche, wobei das Einstellmittel (12) ausschließlich drehbar ist, insbesondere um die Längsachse (L), und/oder wobei das Einstellmittel 12 in einer festen axialen Position entlang der Längsachse (L) festgelegt bzw. fixiert ist.

20. Pipettiervorrichtung nach einem der voranstehenden Ansprüche, wobei Pipettiervorrichtung (1) eine Antriebseinrichtung (9) zum Bewegen des Verdrängermittels (4) im Verdrängergehäuse (5) aufweist, wobei die Antriebseinrichtung (9) ein Bedienelement (11) aufweist, wobei das Bedienelement (11) axial, insbesondere entlang der Längsachse L und/oder relativ zu dem Einstellmittel (12), bewegbar ist, vorzugsweise wobei das Bedienelement (11) ausschließlich linear entlang der Längsachse (L) bewegbar ist.
